# EUROPEAN PATENT SPECIFICATION

(11) **EP 4 506 828 B1**
(45) Date of publication and mention of the grant of the patent: **17.09.2025**
(21) Application number: 24191677.4
(22) Date of filing: 30.07.2024
(51) Int. Cl.: G06F 12/0817, G06F 12/0831

(54) **CACHE-COHERENT COMPUTER SYSTEM NODE AND METHOD FOR CLEANING OF COHERENCE DIRECTORIES ON COMPUTER SYSTEM NODE TO REDUCE CACHE-COHERENCE OVERHEAD**
CACHEKOHÄRENTER COMPUTERSYSTEMKNOTEN UND VERFAHREN ZUR REINIGUNG VON KOHÄRENZVERZEICHNISSEN AUF EINEM COMPUTERSYSTEMKNOTEN ZUR REDUZIERUNG VON CACHEKOHÄRENZ-OVERHEAD
NOEUD DE SYSTÈME INFORMATIQUE COHÉRENT DE MÉMOIRE CACHE ET PROCÉDÉ DE NETTOYAGE DE RÉPERTOIRES DE COHÉRENCE SUR UN NOEUD DE SYSTÈME INFORMATIQUE POUR RÉDUIRE LE SURDÉBIT DE COHÉRENCE DE MÉMOIRE CACHE

(30) Priority: 08.08.2023 US 202363531384 P; 05.02.2024 US 202418432630
(43) Date of publication of application: 12.02.2025
(73) Proprietor: Samsung Electronics Co., Ltd, Suwon-si, Gyeonggi-do 16677 (KR)
(72) Inventor: SURY, Samantika Subramaniam, San Jose, CA, 95134 (US)
(74) Representative: Kuhnen & Wacker Patent- und Rechtsanwaltsbüro PartG mbB

(56) References cited:
- US-A1- 2016 350 219
- US-A1- 2016 350 220
- US-B2- 10 310 979

## Description

### BACKGROUND

### 1. Field

The present application relates to a system and method for cleaning the coherence directory of a computer system.

### 2. Description of the Related Art

Computer nodes include a number of computing elements, such as cores and/or accelerators, that cache data. In some cache-coherent nodes, a coherence directory is utilized that tracks all of the addresses of the cached data in the node and identifies which computing elements are caching the cached line. The coherence directory is utilized to send snoop requests to get a current copy of the data and to invalidate cached copies in response to a computing element modifying the cached data. Additionally, in some cache-coherent nodes, the computing elements update the coherence directory when they want to evict cached lines or change their state to keep the entire node up-to-date. This is done by evicting an existing line out of the directory and removing all its associated data copies from the node. In this scenario, having up to date information helps to evict lines that are old or not required to make space for new lines. In high-performance computing (HPC) applications and general data center systems with few cores, evictions cleaned the directories and kept the coherence state up to date.

However, it is becoming increasingly common for cores/accelerators to employ silent evictions which drops clean or unmodified copies of data from the caches without informing the coherence directories to avoid unnecessary core compute cycles (i.e., messages that will notify the directories) and to reduce message traffic on the network-on-chip. This leads to the coherence directories becoming stale, which can lead to inefficient evictions, unnecessary invalidate or snoop messages being sent out, and performance degradation. Furthermore, silent evictions also lead to designers having to significantly overprovision the coherence directories to account for the presence of stale lines. Without this overprovisioning and with silent evictions, all lines start to look like they are being concurrently used since the coherence directories are not getting cleaned at cache line eviction time. As the number of cores or accelerator caches increases on a node, the growth in the coherence directories (through the extra number of lines as well as increase in tracking bit vector size) can cause serious area and power concerns.

The above information disclosed in this Background section is only for enhancement of understanding of the background of the invention and therefore it may contain information that does not constitute prior art.

US 2016/350220 A1 discloses a cache coherency controller comprising: a directory indicating, for memory addresses cached by one or more of a group of one or more cache memories connectable in a coherent cache structure, which of the cache memories are caching those memory addresses; and control circuitry configured to detect a directory entry relating to a memory address to be accessed so as to coordinate, amongst the cache memories, an access to a memory address by one of the cache memories or a coherent agent in instances when the directory entry indicates that another of the cache memories is caching that memory address; the control circuitry being responsive to status data indicating whether each cache memory in the group is currently subject to cache coherency control so as to take into account, in the detection of the directory entry relating to the memory address to be accessed, only those cache memories in the group which are currently subject to cache coherency control.

US 2016/350219 A1 discloses a cache coherency controller comprising: a directory indicating, for memory addresses cached by a group of two or more cache memories in a coherent cache structure, which of the cache memories are caching those memory addresses, the directory being associative so that multiple memory addresses map to an associative set of more than one directory entry; and control logic responsive to a memory address to be newly cached, and configured to detect whether one or more of the set of directory entries mapped to that memory address is available for storage of an indication of which of the two or more cache memories are caching that memory address; the control logic being configured so that when all of the set of directory entries mapped to that memory address are occupied, the control logic is configured to select one of the set of directory entries as a directory entry to be overwritten and the corresponding cached information to be invalidated, the control logic being configured to select a directory entry to be overwritten, from the set of directory entries, in dependence upon which of the group of two or more cache memories is indicated by that directory entry, according to a likelihood of selection amongst the two or more cache memories.

US 10 310 979 B2 discloses a data processing system, having two or more of processors that access a shared data resource. Data stored in a local cache is marked as being in a 'UniqueDirty', 'SharedDirty', 'UniqueClean', 'SharedClean' or 'Invalid' state. A snoop filter monitors access by the processors to the shared data resource, and includes snoop filter control logic and a snoop filter cache configured to maintain cache coherency. The snoop filter cache does not identify any local cache that stores the block of data in a 'SharedDirty' state, resulting in a smaller snoop filter cache size and simple snoop control logic. The data processing system by be defined by instructions of a Hardware Description Language.

### SUMMARY

The present disclosure relates to various embodiments of a cache-coherent computer system node. In one embodiment, the cache-coherent computer system node includes a network-on-chip, a number of computing elements in communication with the network-on-chip, a coherence directory including a number of addresses for cache of the computing elements, a number of coherence states of the addresses, and a number of tracking vectors of the addresses, and a coherence directory controller configured to send a probe to the computing elements during a free cycle of the network-on-chip. The probe is configured to inquire whether an address of the addresses stored in the coherence directory is in the cache of the computing elements, and the coherence directory is configured to clean the coherence directory to remove the address in response to an acknowledgement indicating that the address is not in the cache.

The computing elements may be homogeneous and include a number of cores.

The computing elements may be homogeneous and include a number of accelerators.

The computing elements may be heterogeneous and include a combination of cores and accelerators.

The coherence directory controller may be configured to send the probe when the computing elements are busy.

The coherence directory controller may be configured to send the probe not in response to a command from the computing elements.

The probe may be incorporated into a standard coherence protocol.

The standard coherence protocol may be a MESI (Modified Exclusive Shared Invalid) protocol.

The coherence directory controller may be configured to send the probe utilizing an existing probe/snoop channel of the standard coherence protocol.

The cache-coherent computer system node may also include main memory connected to the cache.

The cache-coherent computer system node may also include an interconnect, and the coherence directory controller may be configured to send the probe over the interconnect.

The coherence directory controller may be configured to send the probe intermittently.

The present disclosure also relates to various embodiments of a method of cleaning a coherence directory in a node of a computer system that includes a network-on-chip and a number of cores and/or a number of accelerators connected to the network-on-chip. In one embodiment, the method includes sending, from a coherence directory controller, a probe to cache of the cores and/or the accelerators during a free cycle of the network-on-chip. The probe inquires whether an address stored in a coherence directory is in the cache. The method also includes receiving an acknowledgement in response to the probe, and cleaning the address from the coherence directory in response to the acknowledgement indicating that the address is not in the cache.

The cores and/or the accelerators may be busy during the sending of the probe.

The sending of the probe may not be in response to a command from the cores and/or the accelerators.

The probe may be incorporated into a standard coherence protocol.

The standard coherence protocol may be a MESI protocol.

The sending of the probe may utilize an existing probe/snoop channel of the standard coherence protocol.

The sending of the probe may include sending the probe over an interconnect.

The sending of the probe may include sending the probe intermittently.

This summary is provided to introduce a selection of features and concepts of embodiments of the present disclosure that are further described below in the detailed description. This summary is not intended to identify key or essential features of the claimed subject matter, nor is it intended to be used in limiting the scope of the claimed subject matter. One or more of the described features may be combined with one or more other described features to provide a workable system or method.

### BRIEF DESCRIPTION OF THE DRAWINGS

The features and advantages of embodiments of the present disclosure will be better understood by reference to the following detailed description when considered in conjunction with the drawings. The drawings are not necessarily drawn to scale.
FIG. 1 is a schematic view of a computer system including a number of computing elements configured to utilize cache, a coherence directory listing addresses of the cache, and a network-on-chip (NOC) connected to the computing elements according to one embodiment of the present disclosure; and
FIG. 2 is a flowchart illustrating tasks of a method of cleaning a coherence directory according to one embodiment of the present disclosure.

### DETAILED DESCRIPTION

The present disclosure relates to various embodiments of a system and a method for cleaning a coherence directory of a node in a computer system that includes a network-on-chip and a number of computing elements, such as cores, accelerators, or a combination of cores and accelerators. The systems and methods of the present disclosure utilize a message (i.e., a probe) periodically sent from a coherence directory controller to the cache of the computing elements during a free cycle of the network-on-chip (NOC). In response to the message determining that an address in the coherence directory is no longer in the cache for computing elements, the coherence directory is configured to clean itself by removing the unused address. In this manner, the systems and methods of the present disclosure are configured to clean the coherence directory without involvement (e.g., requests) from the computing elements (e.g., the cores and/or the accelerators). Cleaning the coherence directory during free cycles of the NOC is useful in high-performance computing (HPC) applications where there are periods of computation where the cores or accelerator computes are busy, but the NOC is idle. During these idle periods the opportunistic cleaning can happen in the background.

Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof may not be repeated.

In the drawings, the relative sizes of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section.

The terminology used herein is for the purpose of describing particular embodiments and is not intended to be limiting of the present invention. As used herein, the singular forms "a" and "an" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present invention refers to "one or more embodiments of the present invention." As used herein, the terms "use," "using," and "used" may be considered synonymous with the terms "utilize," "utilizing," and "utilized," respectively. Also, the term "exemplary" is intended to refer to an example or illustration.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

For the purposes of this disclosure, expressions such as "at least one of," when preceding a list of elements, modify the entire list of elements and do not modify the individual elements of the list. For example, "at least one of X, Y, and Z," "at least one of X, Y, or Z," and "at least one selected from the group consisting of X, Y, and Z" may be construed as X only, Y only, Z only, any combination of two or more of X, Y, and Z, such as, for instance, XYZ, XYY, YZ, and ZZ, or any variation thereof. Similarly, the expression such as "at least one of A and B" may include A, B, or A and B. As used herein, "or" generally means "and/or," and the term "and/or" includes any and all combinations of one or more of the associated listed items. For example, the expression such as "A and/or B" may include A, B, or A and B.

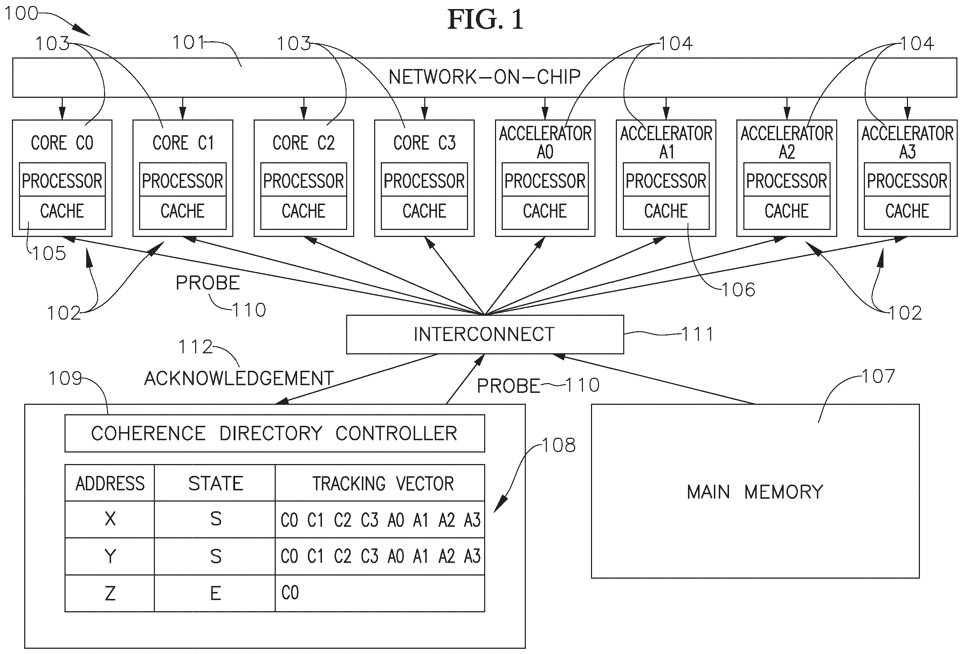

FIG. 1 is a schematic view of a node **100** of a computer system including a network-on-chip (NOC) **101** and a number of computing elements **102** connected to the NOC **101.** In the illustrated embodiment, the computing elements **102** include cores **103** (e.g., cores C0, C1, C2, and C3) and accelerators **104** (e.g., accelerators A0, A1, A2, and A3). In one or more embodiments, the computing elements **102** of the node **101** may be homogeneous (e.g., cores only or accelerators only) or heterogeneous (e.g., a mixture of cores and accelerators).

In the illustrated embodiment, the computing elements **102** (e.g., the cores **103** and the accelerators **104**) include cache **105, 106** (e.g., a high-speed data storage layer stored in random-access memory (RAM)), respectively, that store a subset of the blocks stored in main memory **107.** Additionally, in the illustrated embodiment, the system **100** includes a coherence directory **108** that contains a list of data addresses of the cached data, a corresponding list of the coherence state of the cached data (e.g., the cached line has been modified (M) from the value in the main memory **107;** the cached line matches the value in the main memory **107** and is exclusive (E) to one core or one accelerator; the cached line matches the value in the main memory **107** and is shared (S) among two or more cores and/or accelerators; or the cached line is invalid (I) according to the MESI protocol), and a list of corresponding tracking bit vectors that indicate which core(s) **103** and/or accelerator(s) **104** are caching that data address. For example, in the illustrated embodiment, the coherence directory **108** lists address "X" and address "Y" each being cached by cores C0, C1, C2, and C3 and accelerators A0, A1, A2, and A3, and having coherence state "S" because the address "X" and address "Y" are both shared among multiple C0, C1, C2, and C3 and accelerators A0, A1, A2, and A3. Additionally, in the illustrated embodiment, the coherence directory **108** lists address "Z" being cached only by core C0, and having coherence state "E" because the address "Z" is cached by only a single computing element, core C0. However, as illustrated in FIG. 1, the cache at address "Y" is not utilized by any of the computing elements **102** (e.g., the cores C0, C1, C2, and C3 or the accelerators A0, A1, A2, and A3).

In the illustrated embodiment, a coherence directory controller **109** is configured to intermittently (e.g., periodically) send a command or message **110** (e.g., a "Check_presence" probe), over an on-node interconnect **111** to the caches **105, 106** of the core(s) **103** and/or accelerator(s) **104,** to determine if a particular address in the coherence directory **108** is in any of the caches **105, 106** of the core(s) **103** and/or accelerator(s) **104.** Additionally, in one or more embodiments, the coherence directory controller **109** is configured to send the command **110** (e.g., the probe) during a free cycle of the NOC **101** (e.g., the coherence directory controller **109** is configured to send the command **110** when the NOC **101** is idle). In one or more embodiments, the message or command **110** (e.g., the probe) may be incorporated into any standard coherence protocol (e.g., the MSI protocol, the MESI protocol, or the MOSI protocol) and it may utilize an existing probe/snoop channel. This probe **110** looks to the core(s) **103** and/or accelerator(s) **104** like any other probe from the NOC **101.**

For instance, in the illustrated embodiment, the coherence directory controller **109** is configured to send a message **110** ("Check_presence Y") over the on-node interconnect **111** to determine whether address "Y" in the coherence directory is in any of the caches **105, 106** of the core(s) **103** and/or accelerator(s) **104.** In response to an acknowledgement message **112** indicating that the address "Y" does not reside in any of the caches **105, 106** of the core(s) **103** and/or accelerator(s) **104,** the coherence directory **108** is configured to delete (e.g., scrub) that address entry "Y" from the coherence directory **108.** In this manner, the coherence directory **108** is configured to opportunistically clean itself in the background during idle periods of the NOC **101** without receiving a request, prompt, or other input from the core(s) **103** and/or accelerator(s) **104** (e.g., the probe **110** provides enhanced functionality of the coherence directory controller **109** so that it can initiate transactions on its own). Cleaning the coherence directory **108** without first receiving a request, prompt, or other input from the core(s) **103** and/or accelerator(s) **104** enables the core(s) **103** and/or accelerator(s) **104** to continue performing computations and accessing cache without being interrupted to update the coherence directory **108.** Cleaning the coherence directory **108** during the free cycles of the NOC **101** is particularly useful in high-performance computing (HPC) applications where there are periods of computation where the core(s) **103** and/or accelerator(s) **104** are busy (e.g busy state), but the NOC **101** is idle. Cleaning the coherence directory **108** without first receiving a request, prompt, or other input from the core(s) **103** and/or accelerator(s) **104** also does not cause any deadlock or livelock in the system **100.**

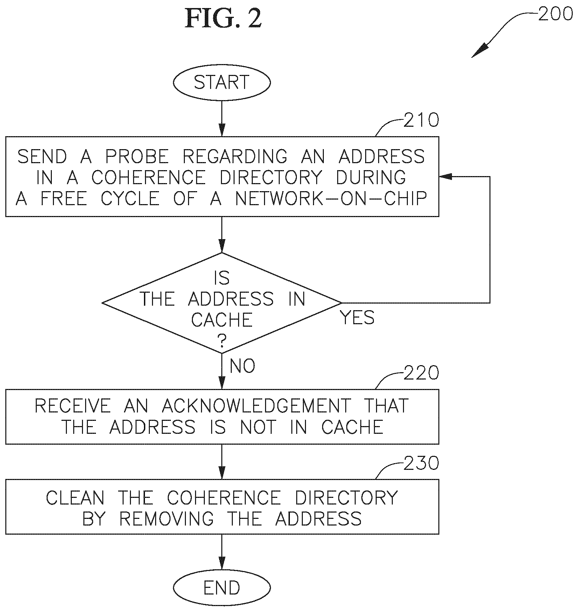

FIG. 2 is a flowchart illustrating tasks of a method **200** of cleaning a coherence directory of a node in a computer system. The node of the computer system includes a network-on-chip (NOC), a number of computing elements (e.g., cores, accelerometers, or a combination of cores and accelerometers) connected to the NOC, and main memory. The computing elements include cached data from the main memory.

In the illustrated embodiment, the method **200** includes a task **210** of sending a command or message (e.g., a probe) during a free cycle of the NOC (i.e., when the NOC is idle) to determine if a particular address in the coherence directory is in any of the caches of the core(s) and/or accelerator(s). The message (e.g., the probe) may be transmitted over an on-node interconnect to the caches of the core(s) and/or the accelerator(s). In one or more embodiments, the probe transmitted in task **210** may be incorporated into any standard coherence protocol (e.g., the MSI protocol, the MESI protocol, the MOSI protocol, or the MOESI protocol) and it may utilize an existing probe/snoop channel.

In the illustrated embodiment, the method **200** includes a task **220** of receiving an acknowledgement indicating whether or not the address transmitted in task **210** is in any of the caches of the core(s) and/or accelerator(s).

In the illustrated embodiment, in response to the acknowledgement of task **220** indicating that the address transmitted in task **210** is not in any of the caches of the cores and/or the accelerators, the method **200** includes a task **230** of cleaning the coherence directory to delete (e.g., scrub) that address entry from the coherence directory.

In this manner, the method **200** involves the coherence directory opportunistically cleaning itself in the background during idle periods of the NOC without receiving a request, prompt, or other input from the core(s) and/or accelerator(s), which enables the core(s) and/or accelerator(s) to continue performing computations and accessing cache without being interrupted to update the coherence directory, which is particularly useful in high-performance computing (HPC) applications where there are periods of computation where the core(s) and/or accelerator(s) are busy, but the NOC is idle. Thus, the method **200** of cleaning the coherence directory does not cause any deadlock or livelock in the computer system.

## Claims

1. A cache-coherent computer system node (100) comprising:
a network-on-chip (101);
a plurality of computing elements (102) connected in a fully cache-coherent manner in communication with the network-on-chip (101);
a coherence directory (108) comprising a plurality of addresses for cache (105, 106) of the plurality of computing elements (102), a plurality of coherence states of the plurality of addresses, and a plurality of tracking vectors of the plurality of addresses; and
a coherence directory controller (109) configured to send a probe (110) to the plurality of computing elements (102) during a free cycle of the network-on-chip (101),
wherein the probe (110) is configured to inquire whether an address of the plurality of addresses stored in the coherence directory (108) is in the cache (105, 106) of the plurality of computing elements (102), and
wherein the coherence directory (108) is configured to clean the coherence directory (108) to remove the address in response to an acknowledgement indicating that the address is not in the cache (105, 106).

2. The cache-coherent computer system node (100) of claim 1, wherein the plurality of computing elements (102) is homogenous and comprises a plurality of cores (103).

3. The cache-coherent computer system node (100) of claim 1, wherein the plurality of computing elements (102) is homogenous and comprises a plurality of accelerators (104).

4. The cache-coherent computer system node (100) of claim 1, wherein the plurality of computing elements (102) is heterogeneous and comprises a combination of a plurality of cores (103) and a plurality of accelerators (104).

5. The cache-coherent computer system node (100) of any one of claims 1 to 4, wherein the coherence directory controller (109) is configured to send the probe (110) when the plurality of computing elements (102) is busy.

6. The cache-coherent computer system node (100) of any one of claims 1 to 5, wherein the coherence directory controller (109) is configured to send the probe (110) not in response to a command from the plurality of computing elements (102).

7. The cache-coherent computer system node (100) of any one of claims 1 to 6, wherein the probe (110) is incorporated into a standard coherence protocol.

8. The cache-coherent computer system node (100) of claim 7, wherein the standard coherence protocol is a MESI protocol.

9. The cache-coherent computer system node (100) of claim 7 or 8, wherein the coherence directory controller (109) is configured to send the probe (110) utilizing an existing probe (110)/snoop channel of the standard coherence protocol.

10. The cache-coherent computer system node (100) of any one of claims 1 to 9, further comprising main memory connected to the cache (105, 106).

11. The cache-coherent computer system node (100) of any one of claims 1 to 10, further comprising an interconnect (111), and wherein the coherence directory controller (109) is configured to send the probe (110) over the interconnect (111).

12. The cache-coherence computer system node (100) of any one of claims 1 to 11, wherein the coherence directory controller (109) is configured to send the probe (110) intermittently.

13. A method (200) of cleaning a coherence directory (108) in a node (100) of a computer system comprising a network-on-chip (101) and a plurality of cores (103) and/or a plurality of accelerators (104) connected to the network-on-chip (101), the method (200) comprising:
sending (210), from a coherence directory controller (109), a probe (110) to a cache (105, 106) of the plurality of cores (103) and/or the plurality of accelerators (104) during a free cycle of the network-on-chip (101), the probe (110) inquiring whether an address stored in the coherence directory (108) is in the cache (105, 106);
receiving (220) an acknowledgement in response to the probe (110); and
cleaning (230) the address from the coherence directory (108) in response to the acknowledgement indicating that the address is not in the cache (105, 106).

14. The method (200) of claim 13, wherein the plurality of cores (103) and/or the plurality of accelerators (104) are busy during the sending of the probe (110).

15. The method (200) of claim 13 or 14, wherein the sending of the probe (110) is not in response to a command from the plurality of cores (103) and/or the plurality of accelerators (104).

## Patentansprüche

1. Cachekohärenter Computersystemknoten (100), aufweisend:
ein Network-on-Chip (101);
eine Mehrzahl an Rechenelementen (102), die auf eine vollständig cache-kohärente Weise in einer Kommunikation mit dem Network-on-Chip (101) verbunden sind;
ein Kohärenzverzeichnis (108), aufweisend eine Mehrzahl an Adressen für einen Cache (105, 106) der Mehrzahl an Rechenelementen (102), eine Mehrzahl an Kohärenzzuständen der Mehrzahl an Adressen, und eine Mehrzahl an Nachverfolgungsvektoren der Mehrzahl an Adressen; und
einen Kohärenzverzeichniscontroller (109), der dafür ausgelegt ist, eine Sonde (110) an die Mehrzahl an Rechenelementen (102) während eines freien Zyklus des Network-on-Chip (101) zu senden,
wobei die Sonde (110) dafür ausgelegt ist, anzufragen, ob sich eine Adresse der in dem Kohärenzverzeichnis (108) gespeicherten Mehrzahl an Adressen in dem Cache (105, 106) der Mehrzahl an Rechenelementen (102) befindet, und
wobei das Kohärenzverzeichnis (108) dafür ausgelegt ist, das Kohärenzverzeichnis (108) zu reinigen, um die Adresse als Reaktion auf eine Bestätigung, die anzeigt, dass sich die Adresse nicht in dem Cache (105, 106) befindet, zu entfernen.

2. Cachekohärenter Computersystemknoten (100) nach Anspruch 1, wobei die Mehrzahl an Rechenelementen (102) homogen sind und eine Mehrzahl an Kernen (103) aufweisen.

3. Cachekohärenter Computersystemknoten (100) nach Anspruch 1, wobei die Mehrzahl an Rechenelementen (102) homogen sind und eine Mehrzahl an Beschleunigern (104) aufweisen.

4. Cachekohärenter Computersystemknoten (100) nach Anspruch 1, wobei die Mehrzahl an Rechenelementen (102) heterogen sind und eine Kombination aus einer Mehrzahl an Kernen (103) und einer Mehrzahl an Beschleunigern (104) aufweisen.

5. Cachekohärenter Computersystemknoten (100) nach einem der Ansprüche 1 bis 4, wobei der Kohärenzverzeichniscontroller (109) dafür ausgelegt ist, die Sonde (110) zu senden, wenn die Mehrzahl an Rechenelementen (102) beschäftigt sind.

6. Cachekohärenter Computersystemknoten (100) nach einem der Ansprüche 1 bis 5, wobei der Kohärenzverzeichniscontroller (109) dafür ausgelegt ist, die Sonde (110) nicht als Reaktion auf einen Befehl von der Mehrzahl an Rechenelementen (102) zu senden.

7. Cachekohärenter Computersystemknoten (100) nach einem der Ansprüche 1 bis 6, wobei die Sonde (110) in ein Standardkohärenzprotokoll eingebunden ist.

8. Cachekohärenter Computersystemknoten (100) nach Anspruch 7, wobei das Standardkohärenzprotokoll ein MESI-Protokoll ist.

9. Cachekohärenter Computersystemknoten (100) nach Anspruch 7 oder 8, wobei der Kohärenzverzeichniscontroller (109) dafür ausgelegt ist, die Sonde (110) unter Verwendung einer vorhandenen Sonde (110) oder eines Snoop-Kanals des Standardkohärenzprotokolls zu senden.

10. Cachekohärenter Computersystemknoten (100) nach einem der Ansprüche 1 bis 9, ferner aufweisend einen Hauptspeicher, der mit dem Cache (105, 106) verbunden ist.

11. Cachekohärenter Computersystemknoten (100) nach einem der Ansprüche 1 bis 10, ferner aufweisend einen Interconnect (111), und wobei der Kohärenzverzeichniscontroller (109) dafür ausgelegt ist, die Sonde (110) über den Interconnect (111) zu senden.

12. Cachekohärenter Computersystemknoten (100) nach einem der Ansprüche 1 bis 11, wobei der Kohärenzverzeichniscontroller (109) dafür ausgelegt ist, die Sonde (110) intermittierend zu senden.

13. Verfahren (200) des Reinigens eines Kohärenzverzeichnisses (108) in einem Knoten (100) eines Computersystems, aufweisend einen Network-on-Chip (101) und eine Mehrzahl an Kernen (103) und/oder eine Mehrzahl an Beschleunigern (104), die mit dem Network-on-Chip (101) verbunden sind, wobei das Verfahren (200) aufweist:
Senden (210), von einem Kohärenzverzeichniscontroller (109), einer Sonde (110) an einen Cache (105, 106) der Mehrzahl an Kernen (103) und/oder der Mehrzahl an Beschleunigern (104) während eines freien Zyklus des Network-on-Chip (101), wobei die Sonde (110) anfragt, ob eine in dem Kohärenzverzeichnis (108) gespeicherte Adresse sich in dem Cache (105, 106) befindet;
Empfangen (220) einer Bestätigung als Reaktion auf die Sonde (110); und
Reinigen (230) der Adresse aus dem Kohärenzverzeichnis (108) als Reaktion darauf, dass die Bestätigung anzeigt, dass sich die Adresse nicht in dem Cache (105, 106) befindet.

14. Verfahren (200) nach Anspruch 13, wobei die Mehrzahl an Kernen (103) und/oder die Mehrzahl an Beschleunigern (104) während dem Senden der Sonde (110) beschäftigt sind.

15. Verfahren (200) nach Anspruch 13 oder 14, wobei das Senden der Sonde (110) nicht als Reaktion auf einen Befehl von der Mehrzahl an Kernen (103) und/oder der Mehrzahl an Beschleunigern (104) erfolgt.

## Revendications

1. Un nœud de système informatique à cohérence de cache (100) comprenant :
un réseau sur puce (101) ;
une pluralité d'éléments informatiques (102) connectés de manière entièrement cohérente avec le cache et en communication avec le réseau sur puce (101) ;
un répertoire de cohérence (108) comprenant une pluralité d'adresses pour la mémoire cache (105, 106) de la pluralité d'éléments informatiques (102), une pluralité d'états de cohérence de la pluralité d'adresses, et une pluralité de vecteurs de suivi de la pluralité d'adresses ; et
un contrôleur de répertoire de cohérence (109) configuré pour envoyer une sonde (110) à la pluralité d'éléments informatiques (102) pendant un cycle libre du réseau sur puce (101),
dans lequel la sonde (110) est configurée pour demander si une adresse parmi la pluralité d'adresses stockées dans le répertoire de cohérence (108) se trouve dans le cache (105, 106) de la pluralité d'éléments informatiques (102), et
dans lequel le répertoire de cohérence (108) est configuré pour nettoyer le répertoire de cohérence (108) afin de supprimer l'adresse en réponse à un accusé de réception indiquant que l'adresse ne se trouve pas dans le cache (105, 106).

2. Le nœud de système informatique à cohérence de cache (100) selon la revendication 1, dans lequel la pluralité d'éléments informatiques (102) est homogène et comprend une pluralité de cœurs (103).

3. Le nœud de système informatique à cohérence de cache (100) selon la revendication 1, dans lequel la pluralité d'éléments informatiques (102) est homogène et comprend une pluralité d'accélérateurs (104).

4. Le nœud de système informatique à cohérence de cache (100) selon la revendication 1, dans lequel la pluralité d'éléments informatiques (102) est hétérogène et comprend une combinaison d'une pluralité de cœurs (103) et d'une pluralité d'accélérateurs (104).

5. Le nœud de système informatique à cohérence de cache (100) selon l'une des revendications 1 à 4, dans lequel le contrôleur de répertoire de cohérence (109) est configuré pour envoyer la sonde (110) lorsque la pluralité d'éléments informatiques (102) est occupée.

6. Le nœud de système informatique à cohérence de cache (100) selon l'une des revendications 1 à 5, dans lequel le contrôleur de répertoire de cohérence (109) est configuré pour envoyer la sonde (110) non pas en réponse à une commande provenant de la pluralité d'éléments informatiques (102).

7. Le nœud de système informatique à cohérence de cache (100) selon l'une des revendications 1 à 6, dans lequel la sonde (110) est intégrée dans un protocole de cohérence standard.

8. Le nœud de système informatique à cohérence de cache (100) selon la revendication 7, dans lequel le protocole de cohérence standard est un protocole MESI.

9. Le nœud de système informatique à cohérence de cache (100) selon la revendication 7 ou 8, dans lequel le contrôleur de répertoire de cohérence (109) est configuré pour envoyer la sonde (110) en utilisant un canal de sonde (110)/snoop existant du protocole de cohérence standard.

10. Le nœud de système informatique à cohérence de cache (100) selon l'une des revendications 1 à 9, comprenant en outre une mémoire principale connectée au cache (105, 106).

11. Le nœud de système informatique à cohérence de cache (100) selon l'une des revendications 1 à 10, comprenant en outre une interconnexion (111), et dans lequel le contrôleur de répertoire de cohérence (109) est configuré pour envoyer la sonde (110) sur l'interconnexion (111).

12. Le nœud de système informatique à cohérence de cache (100) de l'une des revendications 1 à 11, dans lequel le contrôleur de répertoire de cohérence (109) est configuré pour envoyer la sonde (110) de manière intermittente.

13. Procédé (200) de nettoyage d'un répertoire de cohérence (108) dans un nœud (100) d'un système informatique comprenant un réseau sur puce (101) et une pluralité de cœurs (103) et/ou une pluralité d'accélérateurs (104) connectés au réseau sur puce (101), le procédé (200) comprenant :
envoyer (210), à partir d'un contrôleur de répertoire de cohérence (109), une sonde (110) vers un cache (105, 106) de la pluralité de cœurs (103) et/ou de la pluralité d'accélérateurs (104) pendant un cycle libre du réseau sur puce (101) ; la sonde (110) demandant si une adresse stockée dans le répertoire de cohérence (108) se trouve dans le cache (105, 106) ;
recevoir (220) un accusé de réception en réponse à la sonde (110) ; et
effacer (230) l'adresse du répertoire de cohérence (108) en réponse à l'accusé de réception indiquant que l'adresse ne se trouve pas dans le cache (105, 106).

14. Le procédé (200) selon la revendication 13, dans lequel la pluralité de cœurs (103) et/ou la pluralité d'accélérateurs (104) sont occupés pendant l'envoi de la sonde (110).

15. Le procédé (200) selon la revendication 13 ou 14, dans lequel l'envoi de la sonde (110) ne se fait pas en réponse à une commande provenant de la pluralité de cœurs (103) et/ou de la pluralité d'accélérateurs (104).
